(19) Europäisches Patentamt / European Patent Office / Office européen des brevets

(11) **EP 2 144 413 B1**

(12) **EUROPEAN PATENT SPECIFICATION**

(45) Date of publication and mention
of the grant of the patent:
**01.10.2014 Bulletin 2014/40**

(51) Int Cl.:
*H04L 1/00* *(2006.01)*      *H04L 25/03* *(2006.01)*
*H04L 25/06* *(2006.01)*     *H04L 25/02* *(2006.01)*

(21) Application number: **08160169.2**

(22) Date of filing: **11.07.2008**

(54) **Iterative channel estimation and decoding using belief propagation with Gaussian approximation**

Iterative Kanalschätzung und Dekodierung mittels Belief Propagation mit Gaußscher Approximation

Estimation itérative du canal et décodage par l'algorithme "belief propagation" avec approximation Gaussienne

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**13.01.2010 Bulletin 2010/02**

(73) Proprietors:
• **Mitsubishi Electric R&D Centre Europe B.V.**
**1119 NS Schiphol Rijk (NL)**
Designated Contracting States:
**FR**
• **MITSUBISHI ELECTRIC CORPORATION**
**Chiyoda-ku**
**Tokyo 100-8310 (JP)**
Designated Contracting States:
**AT BE BG CH CY CZ DE DK EE ES FI GB GR HR HU IE IS IT LI LT LU LV MC MT NL NO PL PT RO SE SI SK TR**

(72) Inventors:
• **Brunel, Loïc**
**35708 Rennes Cedex 7 (FR)**
• **Boutros, Joseph**
**35708 Rennes Cedex 7 (FR)**
• **Liu, Yang**
**35708 Rennes Cedex 7 (FR)**

(74) Representative: **Maillet, Alain**
**Cabinet Le Guen Maillet**
**5, place Newquay**
**B.P. 70250**
**35802 Dinard Cedex (FR)**

(56) References cited:
• **CHING-SHYANG MAA ET AL: "Blind joint channel estimation and signal decoding for systems with time-varying Rayleigh-fading channels" 57TH VEHICULAR TECHNOLOGY CONFERENCE (VTC) HELD IN JEJU, KOREA, vol. 4, 22 April 2003 (2003-04-22), - 25 April 2003 (2003-04-25) pages 2575-2578, XP010862334 NEW YORK, NY, USA ISBN: 978-0-7803-7757-8**
• **KAYNAK M N ET AL: "Belief propagation over frequency selective fading channels" 60TH VEHICULAR TECHNOLOGY CONFERENCE (VTC) 2004 HELD IN LOS ANGELES, CA, USA, vol. 2, 26 September 2004 (2004-09-26), - 29 September 2004 (2004-09-29) pages 1367-1371, XP010786848 PISCATAWAY, NJ, USA ISBN: 978-0-7803-8521-4**
• **KHALIGHI M-A ET AL: "Channel Estimation in Turbo-BLAST Detectors Using EM Algorithm" 2005 IEEE INTERNATIONAL CONFERENCE ON ACOUSTICS, SPEECH, AND SIGNAL PROCESSING, vol. 3, 18 March 2005 (2005-03-18), pages 1037-1040, XP010792427 PISCATAWAY, NJ, USA ISBN: 978-0-7803-8874-1**
• **FRANK R KSCHISCHANG ET AL: "Factor Graphs and the Sum-Product Algorithm", IEEE TRANSACTIONS ON INFORMATION THEORY, IEEE PRESS, USA, vol. 47, no. 2, 1 February 2001 (2001-02-01), XP011027872, ISSN: 0018-9448**

## Description

The present invention relates generally to a method for estimating, by a receiver, the likelihood of at least two received symbols assuming symbols transmitted by a transmitter through a channel.

Communication systems using advanced transmission schemes, including for instance turbo codes, operate at very low signal-to-noise ratio (SNR). For that, accurate channel estimation at low SNR is needed.

Classical linear channel estimation like minimum mean square estimation (MMSE) is not enough accurate at very low signal-to-noise ratio.

The Paper of Ching -Shyang et AL entitled" Blind joint channel estimation and signal decoding for systems with time-varying Rayleigh-fading channels" discloses an iterative decoder which is associated with a Kalman filter. The paper was presented at the 57th VTC conference, 22 April 2003 - 25 April 2003.

Since the complexity which is affordable at the receiver side continuously grows, iterative structures can be considered. These iterative structures are especially efficient if they include a decoding step of the channel code in each iteration.

As example, the expectation-maximisation algorithm disclosed in the paper of A. P. Dempster, N. M. Laird and D. B. Rubin entitled "Maximum likelihood from incomplete data via the EM algorithm", published in the Journal of the Royal Statistical Society (B), vol. 13, no. 6, pp. 1-38, 1977 handles continuous variables through a posteriori probabilities (APPs) of transmitted symbols. That algorithm achieves a good performance-complexity trade-off but is very sensitive to the pilot overhead because it requires good initialisation. That algorithm is not well suited for systems with a small amount of pilot symbols.

Propagating messages in a suitable factor graph as disclosed in the paper of H-A Loeliger entitled "An Introduction to Factor Graphs," and published in the IEEE Mag. on Signal Processing, vol. 21, pp. 28-41, Jan. 2004 enables the derivation of iterative algorithms. It might be an interesting tool for a generic implementation, implementing a belief propagation algorithm which can solve different problems depending on parameters. Among various receiver issues solved using the belief propagation algorithm, we can cite decoding, channel estimation, synchronization and detection. Channel estimation handles continuous variables.

The paper of A.P. Worthen and W. E. Stark entitled "Unified Design of Iterative Receivers Using Factor Graphs," and published in the IEEE Trans. on Information Theory, vol. 47, no. 2, pp. 843-849, Feb. 2001 presents a belief propagation algorithm which handles continuous variables. In that paper canonical distributions are used for quantizing probability distributions in order to propagate discrete probability distributions.

Indeed, when handling discrete variables, probabilities can be propagated through the algorithm, but when handling continuous variables, probability density functions (pdf) should be propagated. The latter issue is solved by quantizing the probability density functions, i.e., by modelling the probability density functions using a histogram.

The degree of quantization has a strong impact on estimation accuracy and performance.

The present invention aims at providing an iterative estimation method which is less complex than the cited prior art and which provides good performances.

The independent claims define the essential features of the invention. Optional features are defined by the dependent claims.

The characteristics of the invention will emerge more clearly from a reading of the following description of an example embodiment, the said description being produced with reference to the accompanying drawings, among which :

Fig. 1 is a diagram representing the architecture of a reception module of a receiver in which the present invention is implemented ;
Fig. 2 is a diagram representing a factor graph representing the transfer of upward messages according to the present invention ;
Fig. 3 is a diagram representing a factor graph representing the transfer of downward messages according to the present invention ;
Fig. 4 discloses an example of an algorithm executed by the reception module for downward messages with Gaussian approximation and discrete upward messages according to the present invention;
Fig. 5 discloses an example of an algorithm executed by the reception module for downward messages with Gaussian approximation and continuous upward messages according to the present invention.

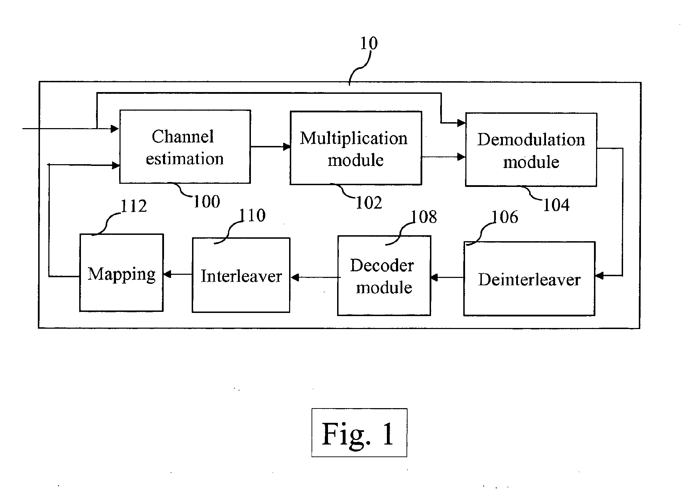

**Fig. 1** is a diagram representing the architecture of a reception module of a receiver in which the present invention is implemented.

The reception module 10 is as example comprised in a wireless receiver which receives electromagnetic waveforms or is comprised in a receiver linked to a wired link like as example an electric power line.

The reception module 10 comprises a demodulation module 104 which demodulates the received symbols representative of data. The demodulation module produces soft information on coded bits. The demodulation comprises detection means which produce soft values on symbols and demapping means which produce soft values on the bits using marginalisation means on symbols.

When the present invention is used in a system in which a Binary Phase Shift Keying (BPSK) modulation is used and in which a single path channel is considered between the transmitter and the receiver, a coded bit sequence of $N$ bits $x_0, ..., x_{N-1}$, is interleaved, modulated by the BPSK modulation and transmitted on a single-input single-output channel with a single path.

In that example, a single coefficient $h$ of the channel has to be estimated. An additive complex white Gaussian noise $n_k$ with zero mean and variance $2\sigma_n^2$ is then added before observation of the received symbols $y_0, ..., y_{N-1}$:

$$y_k = hx_k + n_k$$

When the present invention is used in a system in which a Quadrature Amplitude Modulation (QAM) is used and in which a single path channel is considered between the transmitter and the receiver, the coded bit sequence of $N$ bits $b_0, ..., b_{N-1}$ is interleaved, modulated by a QAM modulation into $N/m$ symbols $x_0, ..., x_{N/m-1}$ (each symbol carrying $m$ bits) and transmitted on a single-input single-output channel with a single path. A single coefficient $h$ has to be estimated. An additive complex white Gaussian noise with zero mean and variance $2\sigma_n^2$ is then added before observation of the received symbols $y_0, ..., y_{N/m-1}$:

$$y_k = hx_k + n_k$$

When the present invention is used in a system in which an Orthogonal Frequency Division Multiplexing (OFDM) technique is used and in which one channel with $L$ paths exists between the transmitter and the receiver, the coded bit sequence of $N$ bits $b_0, ..., b_{N-1}$ is interleaved, modulated by a QAM modulation into $N/m$ symbols $x_0, ..., x_{N/m-1}$ (each symbol carrying $m$ bits) and transmitted as an OFDM waveform with $N/m$ sub-carriers on a single-input single-output channel with $L$ paths. A vector $h$ of $L$ coefficients has to be estimated. Equivalently, there is a vector $H$ of $N/m$ channel coefficients in the frequency domain and $H = \Omega h$, where $\Omega$ is a $N/m$ times $L$ matrix containing the $L$ first columns of the Fast Fourier Transfer (FFT) matrix. An additive complex white Gaussian noise with zero mean and variance $2\sigma_n^2$ is then added before observation of the received symbols $y_0, ..., y_{N/m-1}$:

$$y_k = H_k x_k + n_k.$$

We denote $Ns$ the number of modulation symbols which correspond to the number of bits in a codeword.

It has to be noted here that the present invention is disclosed in an example wherein a single-input single-output system is assumed. The present invention is also applicable to multiple input multiple output systems or single input multiple output systems or multiple input single output systems.

The reception module 10 comprises a de-interleaver 106 which de-interleaves the soft information on coded bits.

The reception module 10 comprises a decoder 108 which performs decoding using the de-interleaved soft information on coded bits and outputs decoded soft information on coded bits.

The reception module 10 comprises an interleaver 110 which interleaves the decoded soft information.

The reception module 10 comprises, when a Quadrature Amplitude Modulation is used, a mapping module 112 which computes the soft information on symbols based on the soft information on coded bits which belong to the symbol.

The reception module 10 comprises a channel estimation module 100 which determines an upward message of the single coefficient or the vector of coefficients for each observation $y_0$ to $y_{Ns-1}$ of the received symbols using the soft information provided by the mapping module 112. It has to be noted here that for initial estimation, pilot symbols $x_{pilot,k}$ are used and perfect knowledge of transmitted pilot symbols is used instead of the soft information provided by the mapping module 112. The observation corresponding to pilot symbol $x_{pilot,k}$ is denoted $y_{pilot,k}$.

The estimates of the channel are fed into a multiplication module 102 which multiplies all the upward messages obtained from the observations yo, ..., $y_{Ns-1}$.

The multiplication module 102 produces downward messages.

When the multiplication module 102 receives discrete upward messages like histograms and produces downward messages with Gaussian function, the multiplication module 102 produces at least a mean of one Gaussian function and possibly the variance of the Gaussian function.

When the multiplication module 102 receives continuous upward messages and produces downward messages with Gaussian function, the multiplication module 102 performs multiplication of exponential data and produces then an exponential value of the mean of the Gaussian function, and possibly the variance of the Gaussian function.

The result of the multiplication module 102 is fed to the demodulation module 104 which demodulates the received symbols based on the result of the multiplication module 102.

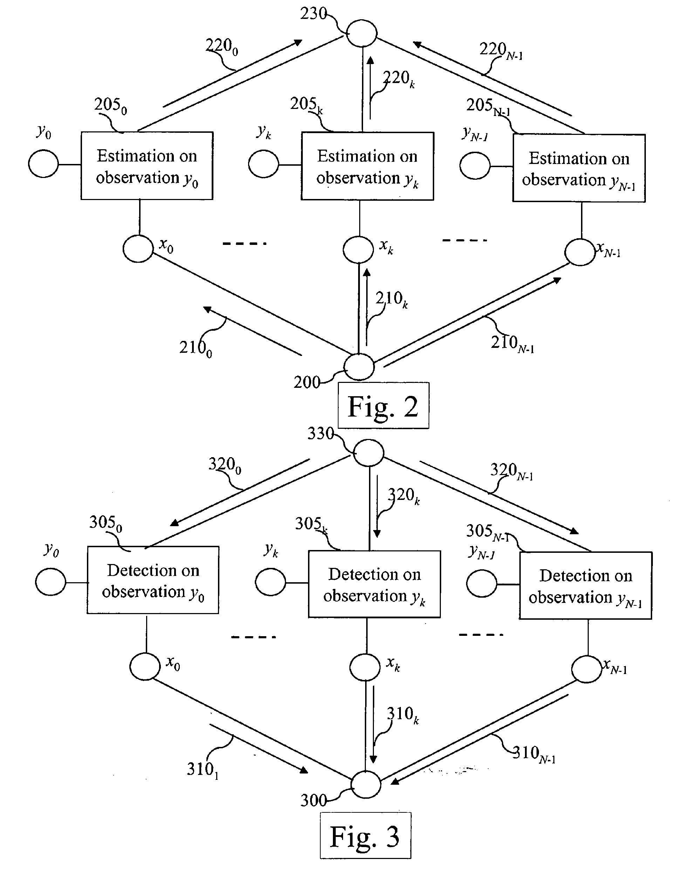

The iterative channel estimation is depicted in the Figs. 2 and 3.

**Fig. 2** is a diagram representing a factor graph representing the transfer of upward messages according to the present invention.

The Fig. 2 shows a factor graph for a Binary Phase Shift Keying modulation.

For Binary Phase Shift Key modulation, as a symbol carries a single bit, the soft information on symbol is identical to the soft information on bit and $Ns = N$.

Information bits are coded together into a coded bit sequence of $N$ bits $x_0, ..., x_{N-1}$, interleaved, modulated and transmitted to the receiver 10 through a channel. Additive white Gaussian noise is then added before observation of the received symbols $y_0, ..., y_{N-1}$.

One iteration comprises an upward propagation and a downward propagation.

The decoding step noted 200 includes both a soft-input soft-output decoder like a forward-backward algorithm and an interleaving/de-interleaving which provides upward messages comprising soft information on coded bits $x_0, ..., x_{N-1}$, like extrinsic information. The decoding step is equivalent to the de-interleaver 106, the decoder module 108 and the interleaver 110 of the Fig. 1.

The soft information on coded bits or equivalently on symbols for BPSK $x_0, ..., x_{N-1}$ are respectively noted $210_0$ to $210_{N-1}$ in the Fig. 2.

When a Quadrature Amplitude Modulation is used, the factor graph provides, for each symbol, as many soft information values as there are bits represented by the symbol.

Each a priori or decoded soft information on coded bits is used together with the corresponding observations of received symbols to perform a channel estimation. One channel estimation $205_0$, $205_k$ and $205_{N-1}$ is performed on each received symbol.

At the very beginning of the estimation process, there is not any a priori information on coded bits and estimation is based on pilot symbols, which are included at the transmitter and known at the reception module 10. The channel $h$ to be estimated is represented by one continuous variable or a vector of continuous variables (here, $h$ is a single scalar because we assume a single-path channel, with static behaviour on the whole code word).

The continuous variable or the vector of continuous variables is quantized into a discrete set of variables or vector of variables $G_0, ..., G_{q-1}$.

For each variable or each vector of variables $G_i$ of this discrete set, the likelihood of the observation $y_k$ assuming that the channel is $G_i$ is marginalised over $x_k$. The likelihood is the probability of receiving $y_k$ assuming that the channel is $G_i$ and that the coded bit $x_k$ has been transmitted. The marginalisation is performed by averaging the likelihood over all possible values of $x_k$, taking into account the a priori probability on $x_k$.

Thus, for each observation $y_k$, a discrete distribution, like an histogram of the quantized estimate of $h$ is obtained.

According to the invention, the upward messages transferred by the channel estimation $205_0$, $205_k$ and $205_{N-1}$ may be discrete or continuous.

When the upward messages are discrete, the discrete upward messages are histograms of the quantized estimate of $h$ and are transferred to the node 230.

When the upward messages are continuous, each channel estimation $205_0$, $205_k$ and $205_{N-1}$ transfers continuous upward messages $220_0$, $220_k$ and $220_{N-1}$ to the node 230.

When Binary Phase Shift Keying modulation is used, single path channel is considered between the transmitter and the receiver and estimation is based on pilot symbols, the continuous upward message $220_k$ derived from pilot symbols is, when all the pilot symbols are equal to one:

$$\exp\left(\frac{y_{pilot,k}}{L_p}\right) \text{ with } \exp\left(\hat{h}\right) = \exp\left(\sum_{k=0}^{L_p-1} \frac{y_{pilot,k}}{L_p}\right) = \prod_{k=0}^{L_p-1} \exp\left(\frac{y_{pilot,k}}{L_p}\right).$$

where $L_p$ is the number of pilot symbols and $\hat{h}$ corresponds to the mean of the probability density function of the channel estimate which is assumed to be a Gaussian function.

When Binary Phase Shift Keying modulation is used, single path channel is considered between the transmitter and the receiver and estimation is based on data, the continuous upward message is determined as follows :

$$\hat{h} = \frac{\sum_{j=0}^{2^{Ns}-1} \Delta_j \frac{1}{Ns} \left( \sum_{k=0}^{Ns-1} s_{k,j} y_k \right) \exp\left\{ \frac{1}{2Ns\sigma_n^2} \left| \sum_{k=0}^{Ns-1} s_{k,j} y_k \right|^2 \right\}}{\sum_{j=0}^{2^{Ns}-1} \Delta_j \exp\left\{ \frac{1}{2Ns\sigma_n^2} \left| \sum_{k=0}^{Ns-1} s_{k,j} y_k \right|^2 \right\}}$$

Where each index $j$ corresponds to a sequence of $Ns$ symbols, $s_{k,j}$ represents the value (-1 or +1) of the $k^{th}$ symbol in sequence $j$, and $\Delta_j$ is the a priori probability of sequence $j$:

$$\Delta_j = \prod_{s_{k,j}=1} \xi_k \prod_{s_{k,j}=-1} \left(1-\xi_k\right)$$

where $\xi_k$ is the a priori probability that $x_k$ equals 1.

In order to reduce the computation of $\hat{h}$, we can only retain the term of the summation corresponding to sequence $j_{max}$ with maximum a priori probability in both numerator and denominator:

$$\exp(\hat{h}) \approx exp\left( \frac{1}{Ns} \sum_{k=0}^{Ns-1} s_{k,j\max} y_k \right) = \prod_{k=0}^{Ns-1} exp\left( \frac{s_{k,j\max} y_k}{Ns} \right).$$

Thus, for each observation $y_k$ the continuous upward message is :

$$\exp\left( \frac{s_{k,j\max} y_k}{Ns} \right).$$

When Quadrature Amplitude Modulation is used, a single path channel is considered between the transmitter and the receiver and the estimation is based on pilot symbols, the continuous upward message derived from pilot symbols is:

$$\exp\left( \frac{y_{pilot,k} x_{pilot,k}^{*}}{L_p E_p} \right)$$

with

$$\exp(\hat{h}) = \exp\left( \frac{1}{L_p E_p} \sum_{k=0}^{L_p-1} y_{pilot,k} x_{pilot,k}^{*} \right) = \prod_{k=0}^{L_p-1} \exp\left( \frac{y_{pilot,k} x_{pilot,k}^{*}}{L_p E_p} \right),$$

$x^*$ denotes the conjugate of $x$.

When Quadrature Amplitude Modulation is used, a single path channel is considered between the transmitter and the receiver and the estimation is based on data, the continuous upward message is determined as follows :

$$\hat{h} = \cfrac{\displaystyle\sum_{j=0}^{M^{Ns}-1} \Delta_j \cfrac{\displaystyle\sum_{k=0}^{Ns-1} s_{k,j}^* y_k}{\left(\displaystyle\sum_{k=0}^{Ns-1} |s_{k,j}|^2\right)^2} \exp\left\{\cfrac{\left|\displaystyle\sum_{k=0}^{Ns-1} s_{k,j}^* y_k\right|^2}{2\sigma_n^2 \displaystyle\sum_{k=0}^{Ns-1} |s_{k,j}|^2}\right\}}{\displaystyle\sum_{j=0}^{M^{Ns}-1} \Delta_j \cfrac{1}{\displaystyle\sum_{k=0}^{Ns-1} |s_{k,j}|^2} \exp\left\{\cfrac{\left|\displaystyle\sum_{k=0}^{Ns-1} s_{k,j}^* y_k\right|^2}{2\sigma_n^2 \displaystyle\sum_{k=0}^{Ns-1} |s_{k,j}|^2}\right\}}$$

where each index $j$ corresponds to a sequence of $Ns$ symbols, $s_{k,j}$ represents the value of the $k^{\text{th}}$ symbol in sequence $j$ and $\Delta_j$ is the a priori probability of sequence $j$:

$$\Delta_j = \prod_k \xi_{k,j}$$

where $\xi_{k,j}$ is the a priori probability that $x_k$ equals $s_{k,j}$.

In order to reduce the computation of $\hat{h}$, we can only retain the term of the summation corresponding to sequence $j_{\max}$ with maximum a priori probability in both numerator and denominator:

$$\hat{h} \approx \cfrac{\displaystyle\sum_{k=0}^{Ns-1} s_{k,j\max}^* y_k}{\displaystyle\sum_{k=0}^{Ns-1} |s_{k,j\max}|^2}$$

Assuming that $Ns$ is enough large, the sum in the denominator is equal to $NsE_d$. Thus,

$$\hat{h} \approx \cfrac{\displaystyle\sum_{k=0}^{Ns-1} s_{k,j\max}^* y_k}{NsE_d}$$

Thus, for each observation $y_k$, the continuous upward message is

$$\exp\left(\cfrac{s_{k,j\max}^* y_k}{NsE_d}\right)$$

with

$$\exp\left(\hat{h}\right) \approx \exp\left(\frac{\sum_{k=0}^{Ns-1} s_{k,j\max}^{*} y_k}{NsE_d}\right) = \prod_{k=0}^{Ns-1} \exp\left(\frac{s_{k,j\max}^{*} y_k}{NsE_d}\right).$$

When the present invention is used in a system in which an Orthogonal Frequency Division Multiplexing technique is used, one channel with $L$ paths exists between the transmitter and the receiver and the estimation is based on pilot symbols, the continuous upward message derived from pilot symbols is:

$$\exp\left(\frac{\Omega_{k,l}^{*} x_{k,pilot}^{*} y_{k,pilot}}{L_p E_p P}\right)$$

with

$$\exp\left(\hat{h}_l\right) = \exp\left(\frac{\sum_{k=0}^{L_p-1} \Omega_{k,l}^{*} x_{k,pilot}^{*} y_{k,pilot}}{L_p E_p P}\right) = \prod_{k=0}^{L_p-1} \exp\left(\frac{\Omega_{k,l}^{*} x_{k,pilot}^{*} y_{k,pilot}}{L_p E_p P}\right)$$

When the present invention is used in a system in which an Orthogonal Frequency Division Multiplexing technique is used, one channel with $L$ paths exists between the transmitter and the receiver and the estimation is based on data, the continuous upward message is determined as follows :

$$\hat{h}_l = \frac{\sum_{j=0}^{M^{Ns}-1} \Delta_j \frac{\sum_{k=0}^{Ns-1} \Omega_{k,l}^{*} s_{k,j}^{*} y_k}{\sum_{k=0}^{Ns-1} \left|s_{k,j}\Omega_{k,l}\right|^2} \prod_{l=0}^{L-1} \exp\left\{\frac{\left|\sum_{k=0}^{Ns-1} \Omega_{k,l}^{*} s_{k,j}^{*} y_k\right|^2}{2\sigma_n^2 \sum_{k=0}^{Ns-1} \left|s_{k,j}\Omega_{k,l}\right|^2}\right\}}{\sum_{j=0}^{M^{Ns}-1} \Delta_j \prod_{l=0}^{L-1} \exp\left\{\frac{\left|\sum_{k=0}^{Ns-1} \Omega_{k,l}^{*} s_{k,j}^{*} y_k\right|^2}{2\sigma_n^2 \sum_{k=0}^{Ns-1} \left|s_{k,j}\Omega_{k,l}\right|^2}\right\}}$$

where each index $j$ corresponds to a sequence of $Ns$ symbols, $s_{k,j}$ is the symbol on sub-carrier $k$ in sequence $j$ and $\Delta_j$ is the a priori probability of sequence $j$:

$$\Delta_j = \prod_k \xi_{k,j}$$

where $\xi_{k,j}$ is the a priori probability that $x_k$ equals $s_{k,j}$. Since the matrix $\Omega$ is built from a Fast Fourier Transform (FFT) matrix, all its elements $\Omega_{k,l}$ have the same power $P$ (e.g., 1 or $1/N$):

$$\Omega_{k,l} = \sqrt{P}\,\exp(-j2\pi kl / Ns)$$

In order to reduce the computation of $\hat{h}$, we can only retain the term of the summation corresponding to sequence $j_{max}$ with maximum a priori probability in both numerator and denominator:

$$\hat{h}_l \approx \frac{\sum_{k=0}^{Ns-1} \Omega_{k,l}^{*} s_{k,j_{max}}^{*} y_k}{\sum_{k=0}^{Ns-1} \left| s_{k,j_{max}} \Omega_{k,l} \right|^2} \approx \frac{\sum_{k=0}^{Ns-1} \Omega_{k,l}^{*} s_{k,j_{max}}^{*} y_k}{Ns E_d P}.$$

Thus, the upward message for each observation is :

$$\exp\left( \frac{\Omega_{k,l}^{*} s_{k,j_{max}}^{*} y_k}{Ns E_d P} \right)$$

with

$$\exp\left(\hat{h}_l\right) \approx \exp\left( \frac{\sum_{k=0}^{Ns-1} \Omega_{k,l}^{*} s_{k,j_{max}}^{*} y_k}{Ns E_d P} \right) = \prod_{k=0}^{Ns-1} \exp\left( \frac{\Omega_{k,l}^{*} s_{k,j_{max}}^{*} y_k}{Ns E_d P} \right)$$

It has to be noted here that the equations mentioned above are for the case when a codeword spans a single OFDM symbol and when there is a pilot symbol on each sub-carrier of another OFDM symbol.

All above mentioned equations can be extended to the case where a codeword spans several OFDM symbols, to the case where there are pilot symbols on different OFDM symbols, to the case where there are not pilot symbols on each sub-carrier.

In the latter case, the matrix $\Omega$ is built from a subset of elements of $L_p$ columns of the FFT matrix. The subset contains the elements corresponding to the positions of pilot symbols among the $Ns$ possible positions.

Thus, for each observation $y_k$, a discrete upward message like an histogram or a continuous upward message of the quantized or not estimate of $h$ is obtained and propagated to the node 230.

The upward messages are represented by the arrows noted $220_0$, $220_k$ and $220_{N-1}$.

For continuous upward messages, the node 230 multiplies the continuous uplink messages.

When Binary Phase Shift Keying modulation is used, single path channel is considered between the transmitter and the receiver and estimation is based on pilot symbols which are all equal to one, the node 230 calculates:

$$\exp(\hat{h}) = \prod_{k=0}^{L_p-1} \exp\left( \frac{y_{pilot,k}}{L_p} \right).$$

When Binary Phase Shift Keying modulation is used, single path channel is considered between the transmitter and the receiver and estimation is based on data, the node 230 calculates :

$$\exp(\hat{h}) \approx \prod_{k=0}^{N-1} \exp\left(\frac{s_{k,j_{max}} y_k}{N}\right).$$

When Quadrature Amplitude Modulation is used, a single path channel is considered between the transmitter and the receiver and the estimation is based on pilot symbols, the node 230 calculates :

$$\exp(\hat{h}) = \prod_{k=0}^{L_p-1} \exp\left(\frac{y_{pilot,k} x_{pilot,k}^*}{L_p E_p}\right).$$

When Quadrature Amplitude Modulation is used, a single path channel is considered between the transmitter and the receiver and the estimation is based on data, the node 230 calculates :

$$\exp(\hat{h}) \approx \prod_{k=0}^{Ns-1} \exp\left(\frac{s_{k,j_{max}}^* y_k}{Ns E_d}\right)$$

When the present invention is used in a system in which an Orthogonal Frequency Division Multiplexing technique is used, one channel with $L$ paths exists between the transmitter and the receiver and the estimation is based on pilot symbols, the node 230 calculates :

$$\exp(\hat{h}_l) \approx \prod_{k=0}^{Ns-1} \exp\left(\frac{\Omega_{k,l}^* s_{pilot,k}^* y_{pilot,k}}{Ns E_p P}\right).$$

When the present invention is used in a system in which an Orthogonal Frequency Division Multiplexing technique is used, one channel with $L$ paths exists between the transmitter and the receiver and the estimation is based on data, the node 230 calculates :

$$\exp(\hat{h}_l) \approx \prod_{k=0}^{Ns-1} \exp\left(\frac{\Omega_{k,l}^* s_{k,j_{max}}^* y_k}{Ns E_d P}\right)$$

$\hat{h}$ corresponds to the mean of the Gaussian function approximating the channel.

For upward discrete messages, the upward discrete messages are histograms. The node 230 multiplies the histograms term by term in order to build a single histogram based information collected from all nodes.

The node 230 identifies a Gaussian function which approximates the built histogram and obtains at least the mean of the identified Gaussian function or determines the mean of the single histogram.

The node 230 determines the variance of the identified Gaussian function or determines the variance of the single histogram.

When Binary Phase Shift Keying modulation is used, single path channel is considered between the transmitter and the receiver and estimation is based on pilot symbols, the single histogram, named also discrete probability density function, can be approximated by a complex Gaussian function, named also Gaussian distribution, with a mean which is equal to the actual channel coefficient $h$ and a variance $2\sigma_h^2 = 2\sigma_n^2 / (L_p)$ where $L_p$ is the number of pilot symbols. The energy of the pilot symbols is assumed to be equal to one.

When Binary Phase Shift Keying modulation is used, single path channel is considered between the transmitter and the receiver and estimation is based on data, the single histogram can be approximated by at least one Gaussian function. More precisely, the single histogram can be approximated by a mixture of two complex Gaussian functions with means $h$ and $-h$ and variance $2\sigma_h^2 = 2\sigma_n^2 / N$ assuming that the data energy is normalized to one. The first Gaussian function is weighted by a coefficient β and the second Gaussian function is weighted by a coefficient (1-β), depending on the accuracy of a priori information provided by the decoder. The closer to hard values the soft values are, the closer to one β is.

It has to be noted here that in a variant, β can be set to one without strong resulting degradation.

When the present invention is used in a system in which a Quadrature Amplitude Modulation, in which a single path channel is considered between the transmitter and the receiver and the estimation is based on pilot symbols, the single histogram can be approximated by a complex Gaussian function with a mean which is equal to the actual channel coefficient $h$ and a variance which is equal to $2\sigma_h^2 = 2\sigma_n^2 / (L_p E_p)$ where $2\sigma_h^2$ is the variance of the single histogram, $L_p$ is the number of pilot symbols and $E_p$ the energy of pilot symbols.

When the present invention is used in a system in which a Quadrature Amplitude Modulation is used, a single path channel is considered between the transmitter and the receiver and the estimation is based on data, the single histogram can be approximated by at least one Gaussian function. More precisely, the single histogram can be approximated by a mixture of four complex Gaussian functions which have means equal to $h, -h, jh$ and $-jh$ (here $j$ is the square root of -1) and which have a variance $2\sigma_n^2 = 2\sigma_n^2 / (Ns\, E_d)$, where $E_d$ is the average energy of modulation data symbols. As the first Gaussian function is dominant a single complex Gaussian function which has the mean $h$ can be considered.

When the present invention is used in a system in which an Orthogonal Frequency Division Multiplexing technique is used, one channel with $L$ paths exists between the transmitter and the receiver and the estimation is based on pilot symbols, the single histogram can be approximated by a $L$-dimensional complex Gaussian function which has a mean which is equal to the actual channel coefficient $H$ and which has a variance $2\sigma_n^2 = 2\sigma_n^2 / (Ns\, E_p\, P)$ if one pilot is available for each sub-carrier.

When the present invention is used in a system in which an Orthogonal Frequency Division Multiplexing technique is used, one channel with $L$ paths exists between the transmitter and the receiver and the estimation is based on data, the single histogram can be approximated by a mixture of $4^{Ns}$ $L$-dimensional complex Gaussian functions with variance $2\sigma_n^2 = 2\sigma_n^2 / (Ns\, E_d\, P)$, where $E_d$ is the average energy of modulation data symbols. As one Gaussian function is dominant, we only consider a single L-dimensional complex Gaussian function which has a mean which is equal to $h$.

The mean and possibly the variance are fed as a downward message.

In prior art, the upward message from each node 205 based on observation $y_k$, is an histogram describing the probabilities of discrete variables or vectors $G_0, ..., G_{q-1}$. The probability of each discrete variable $G_i$ is denoted $P_k(G_i)$.

This probability $P_k(G_i)$ is computed based on the Gaussian distribution of the additive Gaussian noise:

$$P_k(G_i) \propto \sum_{j=0}^{M-1} \exp\left( -\frac{\left| y_k - s_j G_i \right|^2}{2\sigma_n^2} \right) \xi(x_k = s_j)$$

where $\xi(x_k=s_j)$ is the probability that the symbol $x_k$ equals $s_j$ transferred as uplink message $210_k$. The proportionality can be replaced by equality by ensuring proper normalisation in order that the sum of all probabilities is equal to one.

In prior art, the downward message is a single histogram built from the $Ns$ histograms provided by messages $220_0 ... 220_{Ns-1}$. The single histogram is built from a term-by-term multiplication of all histograms. The probability of the discrete variable $G_i$ is:

$$P(G_i) \propto \prod_{k=0}^{Ns-1} P_k(G_i)$$

The likelihood of $y_k$ assuming that the transmitted symbol is $s_j$ is then obtained by averaging using the histogram:

$$p\left(y_k \middle| x_k = s_j\right) = \sum_{i=0}^{q-1} P(G_i)\, p\left(y_k \middle| x_k = s_j, h = G_i\right) \propto \sum_{i=0}^{q-1} P(G_i) \exp\left( -\frac{\left| y_k - s_j G_i \right|^2}{2\sigma_n^2} \right)$$

As it has already been stated, the inventors have observed that the single histogram can be approximated by a mixture of Gaussian functions or even a single Gaussian function.

A Gaussian function is also named a Gaussian distribution.

If we consider a single Gaussian function, the mean $\hat{h}$ and the variance $2\sigma_h^2$ of the Gaussian function are sufficient to describe the Gaussian function. According to the invention, the mean and the variance can be directly computed from the histogram or from a Gaussian function approximating the histogram. The variance can also be derived from the Gaussian noise variance $2\sigma_n^2$.

According to the present invention, the downward message $320_k$ is a mean and possibly a variance. Then, the likelihood of $y_k$ assuming that the transmitted symbol is $s_j$ is then obtained by averaging assuming that the probability density function of the channel estimate is a Gaussian function with mean $\hat{h}$ and variance $2\sigma_h^2$:

$$p\left(y_k \middle| x_k = s_j\right) = \int_g p_{Gaussian}(g) p\left(y_k \middle| x_k = s_j, h = g\right) dg$$

$$\propto \int_g \exp\left(-\frac{\left|g - \hat{h}\right|^2}{2\sigma_h^2}\right) \exp\left(-\frac{\left|y_k - s_j g\right|^2}{2\sigma_n^2}\right) dg$$

This integral expression can be analytically derived and the likelihood can be determined as a function of the mean $\hat{h}$ and the variance $2\sigma_h^2$.

According to the invention, the uplink message can be continuous.

By increasing the number $q$ of discrete values in the histogram to infinity, the histogram can be replaced by a probability density function, having the same expression for each value g as if it were part of the discrete values. The discrete histogram :

$$P(G_i) \propto \prod_{k=0}^{Ns-1} P_k(G_i) = \prod_{k=0}^{Ns-1} \sum_{j=0}^{M-1} \exp\left(-\frac{\left|y_k - s_j G_i\right|^2}{2\sigma_n^2}\right) \xi(x_k = s_j)$$

can be replaced by :

$$p(g) \propto \prod_{k=0}^{Ns-1} \sum_{j=0}^{M-1} \exp\left(-\frac{\left|y_k - s_j g\right|^2}{2\sigma_n^2}\right) \xi(x_k = s_j)$$

Using the probability density function of a continuous variable g analytical, formulas are derived according to the present invention. The mean $\hat{h}$ to be used as a downward message is:

$$\hat{h} = \frac{\int_g g\, p(g)\, dg}{\int_g p(g)\, dg}$$

where the denominator ensures proper normalisation.

After some simplification, the analytical derivation results in an expression of $\hat{h}$ which is a sum of $Ns$ terms $U_k$, each one only depending on a single index k, i.e., a single observation $y_k$ and a single symbol $x_k$:

$$\hat{h} = \sum_{k=0}^{Ns-1} U_k$$

Thus,

$$\exp(\hat{h}) = \prod_{k=0}^{Ns-1} \exp(U_k)$$

Hence, the node 230 either performs a summation when the upward message $220_k$ is $U_k$ and the downward message is at least the mean $\hat{h}$ or the node 230 performs a multiplication when the upward message is the exponential of $U_k$ and the downward message is at least the exponential of mean $\hat{h}$.

The same approach can be taken when there is a mixture of Gaussian functions.

**Fig. 3** is a diagram representing a factor graph representing the transfer of downward messages according to the present invention.

The Fig. 3 shows a factor graph for a Binary Phase Shift Keying modulation.

The node 330 is identical to the node 230. The node 330 transfers a downward message comprising at least the mean of the Gaussian approximation and possibly the variance to each detection/demapping modules $305_0$, $305_k$ and $305_{N-1}$.

The downward messages are represented by the arrows noted $320_0$, $320_k$ and $320_{N-1}$.

The detection/demapping modules $305_0$, $305_k$ to $305_{N-1}$ proceed to the detection and demapping based on observations $y_0$, $y_k$ and $y_{N-1}$ and at least the mean of the Gaussian function and possibly the variance of the channel estimate.

In each of these N nodes, the likelihood of observation $y_k$ assuming transmission of the coded bit $x_k$ is computed. All likelihoods from all N nodes are then used for the decoder 300.

When Binary Phase Shift Keying (BPSK) modulation is used and single path channel is considered between the transmitter and the receiver, the likelihood of $y_k$ assuming $x_k=1$ and using Gaussian approximation, is equal to :

$$p(y_k|x_k = 1) = \left\{ 1 + \exp\left( \frac{2\,\mathrm{Re}\{y_k \hat{h}^*\}}{\sigma_h^2 + \sigma_n^2} \right) \right\}^{-1}$$ when the variance is provided by the node 330,

$$p(y_k|x_k = 1) = \left\{ 1 + \exp\left( \frac{2\,\mathrm{Re}\{y_k \hat{h}^*\}}{\sigma_n^2 / L_p + \sigma_n^2} \right) \right\}^{-1}$$ when the estimation is based on pilot symbols with energy equal to one and when the variance is determined by the module $305_k$.

**Re**{x} is the real part of x. $\hat{h}$ is the mean of the Gaussian function delivered by the downward message.

It has to be noted here that, as the downward message comprises $\exp(\hat{h})$, the natural logarithm operation has to be performed on $\exp(\hat{h})$.

When Binary Phase Shift Keying modulation is used and single path channel is considered between the transmitter and the receiver, the likelihood of $y_k$, assuming $x_k=1$ and using Gaussian approximation is equal to :

$$p(y_k|x_k = 1) = \frac{\beta + (1 - \beta) \exp\left( \frac{2\,\mathrm{Re}\{y_k \hat{h}^*\}}{\sigma_h^2 + \sigma_n^2} \right)}{1 + \exp\left( \frac{2\,\mathrm{Re}\{y_k \hat{h}^*\}}{\sigma_h^2 + \sigma_n^2} \right)}$$ when the estimation is based on data

with energy equal to one and when the variance is provided by the node 330,

$$p(y_k|x_k=1)=\frac{\beta+(1-\beta)\exp\left(\frac{2\,\mathrm{Re}\{y_k\hat{h}^*\}}{\sigma_n^{\,2}/N+\sigma_n^{\,2}}\right)}{1+\exp\left(\frac{2\,\mathrm{Re}\{y_k\hat{h}^*\}}{\sigma_n^{\,2}/N+\sigma_n^{\,2}}\right)}$$

when the estimation is based on data with energy equal to one and when the variance is determined by the module $305_k$.

When the present invention is used in a system in which a Quadrature Amplitude Modulation (QAM) is used and in which a single path channel is considered between the transmitter and the receiver, the likelihood of $y_k$ assuming $x_k=s_i$, where $s_i$ is one of the $M=2^m$ modulation symbols, and using Gaussian approximation, is equal to :

$$p(y_k|x_k=s_i)\propto\frac{1}{8\pi\left(\sigma_h^{\,2}|s_i|^2+\sigma_n^{\,2}\right)}\exp\left(-\frac{|y_k-s_i\hat{h}|^2}{2\left(\sigma_h^{\,2}|s_i|^2+\sigma_n^{\,2}\right)}\right)$$

when the estimation is based on pilot or data symbols and when the variance is provided by the node 330,

$$p(y_k|x_k=s_i)\propto\frac{1}{8\pi\left(\sigma_n^{\,2}|s_i|^2/(NsE_d)+\sigma_n^{\,2}\right)}\exp\left(-\frac{|y_k-s_i\hat{h}|^2}{2\left(\sigma_n^{\,2}|s_i|^2/(NsE_d)+\sigma_n^{\,2}\right)}\right)$$

when the estimation is based on data symbols and when the variance is determined by the module $305_{k'}$,

$$p(y_k|x_k=s_i)\propto\frac{1}{8\pi\left(\sigma_n^{\,2}|s_i|^2/(NsE_d)+\sigma_n^{\,2}\right)}\exp\left(-\frac{|y_k-s_i\hat{h}|^2}{2\left(\sigma_n^{\,2}|s_i|^2/(L_pE_p)+\sigma_n^{\,2}\right)}\right)$$

when the estimation is based on pilot symbols and when the variance is determined by the module $305_k$.

$\hat{h}$ is the mean of the Gaussian function delivered by the downward message. It has to be noted here that an appropriate normalisation should be made to replace the proportionality by equality.

When the present invention is used in a system in which an Orthogonal Frequency Division Multiplexing technique is used and in which one channel with $L$ paths exists between the transmitter and the receiver, the likelihood of $y_k$ assuming $x_k=s_i$, where $s_i$ is one of the $M=2^m$ modulation symbols, and using Gaussian approximation, is equal to :

$$p(y_k|x_k=s_i)\propto\exp\left(-\frac{\left|y_k-s_i\sum_{l=0}^{L-1}\Omega_{k,l}\hat{h}_l\right|^2}{2\left(\sigma_h^{\,2}|s_i|^2+\sigma_n^{\,2}\right)}\right)$$

when the estimation is based on pilot or data symbols and when the variance is provided by the node 330,

$$p(y_k|x_k=s_i)\propto\exp\left(-\frac{\left|y_k-s_i\sum_{l=0}^{L-1}\Omega_{k,l}\hat{h}_l\right|^2}{2\left(\sigma_n^{\,2}|s_i|^2/(NsE_dP)+\sigma_n^{\,2}\right)}\right)$$

when the estimation is based on data symbols and when the variance is determined by the module $305_{k'}$,

$$p(y_k|x_k=s_i)\propto\exp\left(-\frac{\left|y_k-s_i\sum_{l=0}^{L-1}\Omega_{k,l}\hat{h}_l\right|^2}{2\left(\sigma_n^{\,2}|s_i|^2/(NsE_pP)+\sigma_n^{\,2}\right)}\right)$$

when the estimation is based on pilot symbols and when the variance is determined by the module $305_k$.

$\hat{h}_l$ is the element $l$ of the mean vector $\hat{h}$ of the $L$-dimensional Gaussian function delivered by the downward message. Appropriate normalisation is required to replace the proportionality by equality.

It has to be noted here that, when the node 320 provides $\exp(\hat{h})$ in the downward message, the natural logarithm of the downward message has to be taken.

The likelihood is then fed by each module $305_0$, $305_k$ to $305_{N-1}$ to the decoder 300.

The transferred likelihoods are represented by the arrows noted $310_0$, $310_k$ and $310_{N-1}$.

When a Quadrature Amplitude Modulation is used, the factor graph provides, for each symbol as many likelihoods as there are bits represented by a symbol.

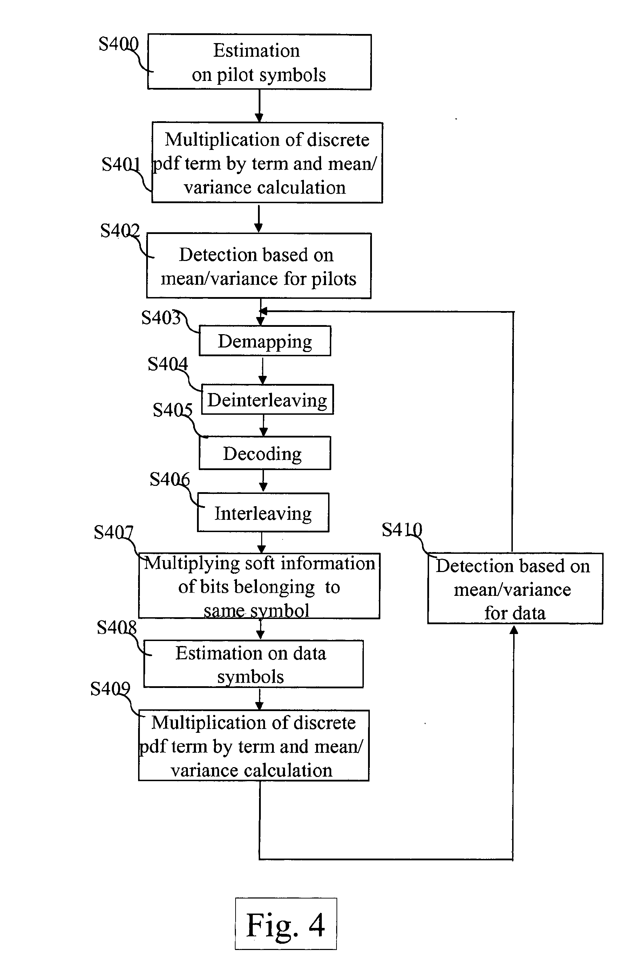

**Fig. 4** discloses an example of an algorithm executed by the reception module for downward messages with Gaussian approximation and discrete upward messages according to the present invention.

The present algorithm is executed by the reception module 10.

Information bits are coded together into a coded bit sequence of $N$ bits $x_0$, ..., $x_{N-1}$, interleaved, modulated and transmitted to the receiver 10 through the channel. Additive white Gaussian noise is then added before observation of the received symbols $y_0$, ..., $y_{N-1}$.

At step S400, an initial channel estimation is performed on received pilot symbols.

At the very beginning of the estimation process, there is not any a priori information on coded bits and estimation is based on pilot symbols, which are included at the transmitter and known at the reception module 10.

When estimation is performed on pilot symbols, the a priori probability is perfect, i.e., equal to 1 for the actual value of the pilot symbol and equal to zero for other values.

The channel $h$ to be estimated is represented by one continuous variable or a vector of continuous variables.

The continuous variable $h$ is quantized into a discrete set of variables $G_0$, ..., $G_{q-1}$. For each variable $G_i$ of this discrete set, the likelihood of the observation $y_k$ is computed assuming that the channel is $G_i$ and the known corresponding pilot symbol has been transmitted.

The vector $h$ of continuous variables is quantized into a discrete set of vectors $G_0$, ..., $G_{q-1}$. For each vector $G_i$ of this discrete set of vectors, the likelihood of the observation $y_k$ is computed assuming that the channel is $G_i$ and the known corresponding pilot symbol has been transmitted.

Thus, for each observation $y_k$, a discrete distribution, like an histogram of the quantized estimate of $h$ is obtained.

The histogram is approximating a probability density function of the channel estimate.

Each histogram of the quantized estimate of $h$ is transferred as a discrete upward message.

At next step S401, the histograms are multiplied term by term in order to build a single histogram.

From the single histogram, a Gaussian function which approximates the built histogram is identified. At the same step, at least the mean of the built histogram is determined. In a variant a variance is also determined.

When Binary Phase Shift Keying modulation is used, single path channel is considered between the transmitter and the receiver and estimation is based on pilot symbols, the single histogram can be approximated by a complex Gaussian function which has a mean which is equal to the actual channel coefficient $h$ and which has a variance $2\sigma_h^2$ $= 2\sigma_n^2 / L_p$ where $L_p$ is the number of pilot symbols, the energy of pilot symbols being assumed to be equal to one.

When the present invention is used in a system in which a Quadrature Amplitude Modulation is used, a single path channel is considered between the transmitter and the receiver and the estimation is based on pilot symbols, the single histogram can be approximated by a complex Gaussian function which has a mean which is equal to the actual channel coefficient $h$ and which has a variance $2\sigma_h^2 = 2\sigma_n^2 / (L_p E_p)$ where $L_p$ is the number of pilot symbols and $E_p$ the energy of pilot symbols.

When the present invention is used in a system in which an Orthogonal Frequency Division Multiplexing technique is used, one channel with $L$ paths exists between the transmitter and the receiver and the estimation is based on pilot symbols, the single histogram can be approximated by a $L$-dimensional complex Gaussian function which has a mean which is equal to the actual channel coefficient $h$ and which has a variance $2\sigma_h^2 = 2\sigma_n^2 / (Ns \, E_p \, P)$ if one pilot is available for each sub-carrier.

In a variant, the variance $2\sigma_h^2$ is the variance of the single histogram.

The determined mean and possibly the variance are fed as a downward message to the detection step S402.

At step S402, detection on received data symbols is made based on the mean and variance determined from pilot symbols.

The detection of data symbols is performed based on observation $y_k$ and at least the mean and possibly the variance of a complex Gaussian function determined according to the present invention on the pilot symbols. The likelihood of observation $y_k$ assuming transmission of the coded bit $x_k$, i.e., the soft information on the received symbol $x_k$, is computed.

When Binary Phase Shift Keying (BPSK) modulation is used and single path channel is considered between the transmitter and the receiver, the likelihood of $y_k$ assuming $x_k=1$ and assuming that the probability density function of the channel estimate is a Gaussian function having a mean $\hat{h}$ is equal to :

$$p\left(y_k \middle| x_k = 1\right) = \left\{ 1 + \exp\left(\frac{2\operatorname{Re}\left\{y_k \hat{h}^*\right\}}{\sigma_h^2 + \sigma_n^2}\right) \right\}^{-1}$$ when the estimation is based on pilot symbols with energy equal to one and when the variance is provided by the node 330,

$$p\left(y_k \middle| x_k = 1\right) = \left\{ 1 + \exp\left(\frac{2\operatorname{Re}\left\{y_k \hat{h}^*\right\}}{\sigma_n^2 / L_p + \sigma_n^2}\right) \right\}^{-1}$$ when the estimation is based on pilot symbols with energy equal to one and when the variance is determined by the module $305_k$.

When the present invention is used in a system in which a Quadrature Amplitude Modulation (QAM) is used and in which a single path channel is considered between the transmitter and the receiver, the likelihood of $y_k$ assuming $x_k = s_i$, where $s_i$ is one of the $M = 2^m$ modulation symbols and assuming that the probability density function of the channel estimate is a Gaussian function having a mean $\hat{h}$ is equal to :

$$p\left(y_k \middle| x_k = s_i\right) \propto \frac{1}{8\pi\left(\sigma_h^2 |s_i|^2 + \sigma_n^2\right)} \exp\left(-\frac{\left|y_k - s_i\hat{h}\right|^2}{2\left(\sigma_h^2 |s_i|^2 + \sigma_n^2\right)}\right)$$ when the estimation is based on pilot symbols and when the variance is provided by the node 330,

$$p\left(y_k \middle| x_k = s_i\right) \propto \frac{1}{8\pi\left(\sigma_n^2 |s_i|^2 /(NsE_d) + \sigma_n^2\right)} \exp\left(-\frac{\left|y_k - s_i\hat{h}\right|^2}{2\left(\sigma_n^2 |s_i|^2 /(L_pE_p) + \sigma_n^2\right)}\right)$$ when the estimation is based on pilot symbols and when the variance is determined by the module $305_k$.

When the present invention is used in a system in which an Orthogonal Frequency Division Multiplexing technique is used and in which one channel with $L$ paths exists between the transmitter and the receiver, the likelihood of $y_k$ a assuming $x_{k=s_i}$, where $s_i$ is one of the $M = 2^m$ modulation symbols and assuming that the probability density function of the channel estimate is a Gaussian function having a mean $\hat{h}$, is equal to :

$$p\left(y_k \middle| x_k = s_i\right) \propto \exp\left(-\frac{\left|y_k - s_i\sum_{l=0}^{L-1}\Omega_{k,l}\hat{h}_l\right|^2}{2\left(\sigma_h^2 |s_i|^2 + \sigma_n^2\right)}\right)$$ when the estimation is based on pilot symbols and when the variance is provided by the node 330,

$$p\left(y_k \middle| x_k = s_i\right) \propto \exp\left(-\frac{\left|y_k - s_i\sum_{l=0}^{L-1}\Omega_{k,l}\hat{h}_l\right|^2}{2\left(\sigma_n^2 |s_i|^2 /(NsE_pP) + \sigma_n^2\right)}\right)$$ when the estimation is based on pilot symbols and when the variance is determined by the module $305_k$.

At next step S403, a de-mapping is performed on the soft information on received symbols in order to provide soft information on coded bits belonging to each symbol.

At next step S404, the soft information on coded bits is de-interleaved.

At next step S405, the de-interleaved soft information on coded bits is processed by a decoder as example using a soft-input soft-output decoder like a forward-backward decoder, which output decoded soft information on coded bits.

At next step S406, the decoded soft information on coded bits is interleaved providing upward messages comprising interleaved soft information on coded bits $x_0, \ldots, x_{N-1}$, like extrinsic information.

At step S407, each interleaved soft information on coded bits belonging to the same symbol are multiplied together. This is the mapping step computing the soft information on modulation symbols.

At next step S408, a channel estimation is performed from data symbols.

The channel $h$ to be estimated is represented by one continuous variable or a vector of continuous variables.

The continuous variable $h$ is quantized into a discrete set of variables $G_0$, ..., $G_{q-1}$. For each variable $G_i$ of this discrete set, the likelihood of the observation $y_k$ assuming that the channel is $G_i$ is marginalised over $x_k$.

The vector $h$ of continuous variables is quantized into a discrete set of vectors $G_0$, ..., $G_{q-1}$. For each vector $G_i$ of this discrete set of vectors, the likelihood of the observation $y_k$ assuming that the channel is $G_i$ is marginalised over $x_k$.

This likelihood is the probability of receiving $y_k$ assuming that the channel is $G_i$ and that the coded bit $x_k$ has been transmitted. The marginalisation is performed by averaging the likelihood over all possible values of $x_k$, taking into account the a priori probability on $x_k$, i.e., the soft information on modulation symbols for data.

Thus, for each observation $y_k$, a discrete distribution, like an histogram of the quantized estimate of $h$ is obtained.

Each histogram of the quantized estimate of $h$ is transferred as a discrete upward message.

At next step S409, the histograms are multiplied term by term in order to build a single histogram based on information collected from all nodes.

A Gaussian function which approximates the single histogram is identified. At the same step, at least the mean of the single histogram is determined. In a variant the variance of the build histogram is also determined.

When Binary Phase Shift Keying modulation is used, single path channel is considered between the transmitter and the receiver and estimation is based on data, the single histogram can be approximated by at least one Gaussian function. More precisely, the single histogram can be approximated by the mixture of two complex Gaussian functions which have means equal to $h$ and $-h$ and a variance $2\sigma_h^2 = 2\sigma_n^2 / N$, the energy of the pilot symbols being assumed to be equal to one.

The first Gaussian function is weighted by a coefficient $\beta$ and the second one $(1-\beta)$, depending on the accuracy of a priori information provided by the decoder. The closer to hard values the soft values are, the closer to one $\beta$ is. It has to be noted here that in a variant, $\beta$ can be set to one without resulting strong degradation.

When the present invention is used in a system in which a Quadrature Amplitude Modulation is used, a single path channel is considered between the transmitter and the receiver and the estimation is based on data, the single histogram can be approximated by at least one Gaussian function. More precisely, the single histogram can be approximated by a mixture of four complex Gaussian functions which have means equal to $h$, $-h$, $jh$ and $-jh$ and a variance equal to $2\sigma_h^2 = 2\sigma_n^2 / (Ns\, E_d)$, where $E_d$ is the average energy of modulation data symbols. As the first Gaussian function is dominant, a single complex Gaussian function which has the mean equal to $h$ can be considered.

When the present invention is used in a system in which an Orthogonal Frequency Division Multiplexing technique is used, one channel with $L$ paths exists between the transmitter and the receiver and the estimation is based on data, the single histogram can be approximated by a mixture of $4^{Ns}$ $Ns$-dimensional complex Gaussian functions which have a variance $2\sigma_h^2 = 2\sigma_n^2 / (Ns\, E_d\, P)$, where $E_d$ is the average energy of modulation data symbols.

One Gaussian function is dominant. Thus, we only consider a single $L$-dimensional complex Gaussian function with mean $h$.

In a variant, the variance is the variance of the single histogram.

The determined mean and possibly the variance are fed as a downward message to the detection step S410.

At step S410 the detection based on observation $y_k$ and at least the mean of the Gaussian approximation and possibly the variance of the channel estimate is performed. The likelihood of observation $y_k$ assuming transmission of the coded bit $x_k$, i.e., the soft information on the received symbol $x_k$, is computed.

When Binary Phase Shift Keying modulation is used and single path channel is considered between the transmitter and the receiver, the likelihood of $y_k$, assuming $x_k=1$ and assuming that the probability density function of the channel estimate is a Gaussian function having a mean $\hat{h}$, is equal to :

$$p(y_k | x_k = 1) = \frac{\beta + (1-\beta)\exp\left(\dfrac{2\,\mathrm{Re}\{y_k \hat{h}^*\}}{\sigma_h^2 + \sigma_n^2}\right)}{1 + \exp\left(\dfrac{2\,\mathrm{Re}\{y_k \hat{h}^*\}}{\sigma_h^2 + \sigma_n^2}\right)}$$
when the estimation is based on data

with energy equal to one and when the variance is provided by the node 330,

$$p\left(y_k \middle| x_k = 1\right) = \frac{\beta + (1-\beta)\exp\left(\dfrac{2\,\mathrm{Re}\left\{y_k \hat{h}^*\right\}}{\sigma_n^{\,2}/N + \sigma_n^{\,2}}\right)}{1 + \exp\left(\dfrac{2\,\mathrm{Re}\left\{y_k \hat{h}^*\right\}}{\sigma_n^{\,2}/N + \sigma_n^{\,2}}\right)}$$

when the estimation is based on data with energy equal to one and when the variance is determined by the module $305_k$.

When the present invention is used in a system in which a Quadrature Amplitude Modulation (QAM) is used and in which a single path channel is considered between the transmitter and the receiver, the likelihood of $y_k$ assuming $x_k = si$, where $s_i$ is one of the $M=2^m$ modulation symbols, and assuming that the probability density function of the channel estimate is a Gaussian function having a mean $\hat{h}$, is equal to :

$$p\left(y_k \middle| x_k = s_i\right) \propto \frac{1}{8\pi\left(\sigma_h^{\,2}|s_i|^2 + \sigma_n^{\,2}\right)}\exp\left(-\frac{\left|y_k - s_i\hat{h}\right|^2}{2\left(\sigma_h^{\,2}|s_i|^2 + \sigma_n^{\,2}\right)}\right)$$

when the estimation is based on data symbols and when the variance is provided by the node 330,

$$p\left(y_k \middle| x_k = s_i\right) \propto \frac{1}{8\pi\left(\sigma_n^{\,2}|s_i|^2/(NsE_d) + \sigma_n^{\,2}\right)}\exp\left(-\frac{\left|y_k - s_i\hat{h}\right|^2}{2\left(\sigma_n^{\,2}|s_i|^2/(NsE_d) + \sigma_n^{\,2}\right)}\right)$$

when the estimation is based on data symbols and when the variance is determined by the module $305_{k,}$.

When the present invention is used in a system in which an Orthogonal Frequency Division Multiplexing technique is used and in which one channel with $L$ paths exists between the transmitter and the receiver, the likelihood of $y_k$ a assuming $x_k = s_i$, where $s_i$ is one of the $M=2^m$ modulation symbols, and assuming that the probability density function of the channel estimate is a Gaussian function having a mean $\hat{h}$, is equal to :

$$p\left(y_k \middle| x_k = s_i\right) \propto \exp\left(-\frac{\left|y_k - s_i\sum_{l=0}^{L-1}\Omega_{k,l}\hat{h}_l\right|^2}{2\left(\sigma_h^{\,2}|s_i|^2 + \sigma_n^{\,2}\right)}\right)$$

when the estimation is based on data symbols and when the variance is provided by the node 330,

$$p\left(y_k \middle| x_k = s_i\right) \propto \exp\left(-\frac{\left|y_k - s_i\sum_{l=0}^{L-1}\Omega_{k,l}\hat{h}_l\right|^2}{2\left(\sigma_n^{\,2}|s_i|^2/(NsE_dP) + \sigma_n^{\,2}\right)}\right)$$

when the estimation is based data symbols and when the variance is determined by the module $305_k$,

The loop constituted by the steps S403 to S410 is then executed several times. The number of iterations depends on complexity but also if convergence of the iterative process is quickly reached or not. Several loops are executed on the same received symbols.

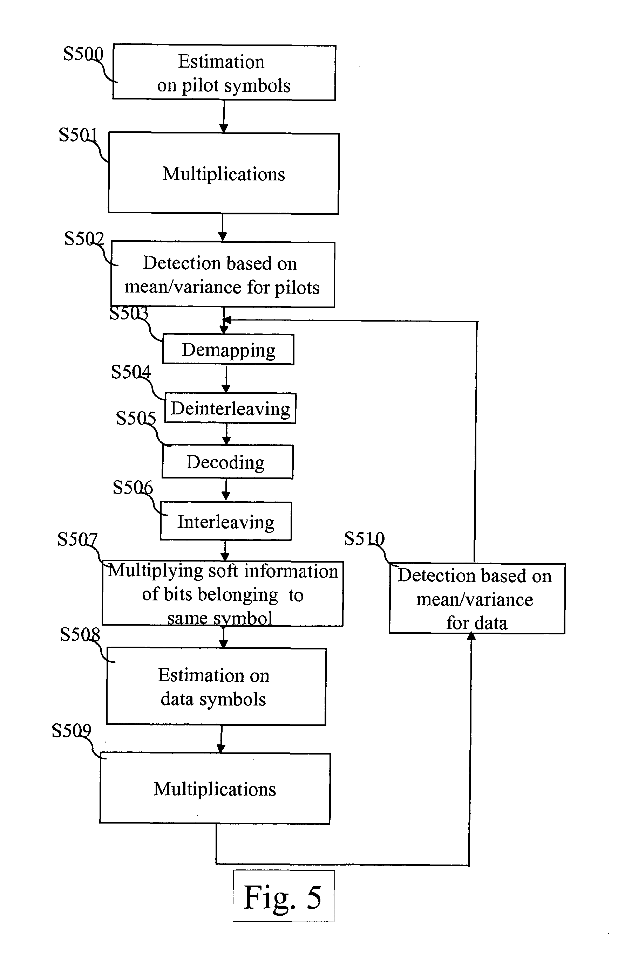

**Fig. 5** discloses an example of an algorithm executed by the reception module for downward messages with Gaussian approximation and continuous upward messages according to the present invention.

The present algorithm is executed by the reception module 10.

Information bits are coded together into a coded bit sequence of $N$ bits $x_0, ..., x_{N-1}$, interleaved, modulated and transmitted to the receiver 10 through the channel. Additive white Gaussian noise is then added before observation of the received symbols $y_0, ... , y_{N-1}$.

At step S500, an initial channel estimation is performed on received pilot symbols.

At the very beginning of the estimation process, there is not any a priori information on coded bits and estimation is based on pilot symbols, which are included at the transmitter and known at the reception module 10.

When estimation is performed on pilot symbols, the a priori probability is perfect, i.e., equal to 1 for the actual value of the pilot symbol and equal to zero for other values.

The channel $h$ to be estimated is represented by a one continuous variable or a vector of continuous variables.

Instead of quantizing the continuous variable or the vector of continuous variables into a discrete set of variables or vectors $G_0, ..., G_{q-1}$ and then computing the mean and possibly the variance from it, the mean and the variance using observations $y_{pilot,k}$ and known corresponding pilot symbols $x_{pilot,k}$ are directly computed.

Indeed, the computation of the discrete upward message followed by the computation of the mean of a Gaussian approximation of the upward message, is replaced by a single integral computation.

When the number of bins in the quantization of the channel estimate tends to infinity, the computation of the mean tends to an integral. Thanks to this integral, an analytical derivation of the mean value of the Gaussian approximation can be derived and its exponential expressed as a product of estimates.

Thus, for each observation $y_k$, an estimate of $h$ is obtained.

Each estimate of $h$ is transferred as a continuous upward message.

When Binary Phase Shift Keying modulation is used, single path channel is considered between the transmitter and the receiver and estimation is based on pilot symbols, the continuous upward message derived from pilot symbols is, when all pilot symbols are equal to one :

$$\exp\left(\frac{y_{pilot,k}}{L_p}\right).$$

When Quadrature Amplitude Modulation is used, a single path channel is considered between the transmitter and the receiver and the estimation is based on pilot symbols, the continuous upward message derived from pilot symbols is:

$$\exp\left(\frac{y_{pilot,k}x_{pilot,k}^{*}}{L_p E_p}\right).$$

When the present invention is used in a system in which an Orthogonal Frequency Division Multiplexing technique is used, one channel with $L$ paths exists between the transmitter and the receiver and the estimation is based on pilot symbols, the continuous upward message derived from pilot symbols is :

$$\exp\left(\frac{\Omega_{k,l}^{*}x_{k,pilot}^{*}y_{k,pilot}}{L_p E_p P}\right).$$

At next step S501, multiplications are performed.

When Binary Phase Shift Keying modulation is used, single path channel is considered between the transmitter and the receiver and estimation is based on pilot symbols, it is calculated at step S501:

$$\exp(\hat{h}) = \prod_{k=0}^{L_p-1} \exp\left(\frac{y_{pilot,k}}{L_p}\right).$$

When Quadrature Amplitude Modulation is used, a single path channel is considered between the transmitter and the receiver and the estimation is based on pilot symbols, it is calculated at step S501:

$$\exp(\hat{h}) = \prod_{k=0}^{L_p-1} \exp\left( \frac{y_{pilot,k} x_{pilot,k}^*}{L_p E_p} \right)$$

When the present invention is used in a system in which an Orthogonal Frequency Division Multiplexing technique is used, one channel with $L$ paths exists exist between the transmitter and the receiver and the estimation is based on pilot symbols, it is calculated at step S501:

$$\exp(\hat{h}_l) \approx \prod_{k=0}^{Ns-1} \exp\left( \frac{\Omega_{k,l}^* x_{pilot,k}^* y_{pilot,k}}{NsE_p P} \right)$$

The calculated mean and possibly the variance is or are fed as a downward message. The algorithm moves then to step S502.

At next step S502, the logarithm of the downward message is taken and the detection on received data symbols is made. The likelihood of observation $y_k$ assuming transmission of the modulation symbol $x_k$, i.e., the soft information on the received symbol $x_k$, is computed.

When Binary Phase Shift Keying modulation is used and single path channel is considered between the transmitter and the receiver, the likelihood of $y_k$ assuming $x_k=1$ and assuming that the probability density function of the channel estimate is a Gaussian function having a mean $\hat{h}$, is equal to :

$$p(y_k | x_k = 1) = \left\{ 1 + \exp\left( \frac{2\operatorname{Re}\{y_k \hat{h}^*\}}{\sigma_h^2 + \sigma_n^2} \right) \right\}^{-1}$$ when the estimation is based on pilot symbols with energy equal to one and when the variance is provided by the node 330,

$$p(y_k | x_k = 1) = \left\{ 1 + \exp\left( \frac{2\operatorname{Re}\{y_k \hat{h}^*\}}{\sigma_n^2 / L_p + \sigma_n^2} \right) \right\}^{-1}$$ when the estimation is based on pilot symbols with energy equal to one and when the variance is determined by the module $305_k$.

When the present invention is used in a system in which a Quadrature Amplitude Modulation is used and in which a single path channel is considered between the transmitter and the receiver, the likelihood of $y_k$ assuming $x_k=s_i$, where $s_i$ is one of the $M=2^m$ modulation symbols, and assuming that the probability density function of the channel estimate is a Gaussian function having a mean $\hat{h}$, is equal to :

$$p(y_k | x_k = s_i) \propto \frac{1}{8\pi\left(\sigma_h^2 |s_i|^2 + \sigma_n^2\right)} \exp\left( -\frac{|y_k - s_i \hat{h}|^2}{2\left(\sigma_h^2 |s_i|^2 + \sigma_n^2\right)} \right)$$ when the estimation is based on pilot symbols and when the variance is provided by the node 330,

$$p(y_k | x_k = s_i) \propto \frac{1}{8\pi\left(\sigma_n^2 |s_i|^2 /(NsE_d) + \sigma_n^2\right)} \exp\left( -\frac{|y_k - s_i \hat{h}|^2}{2\left(\sigma_n^2 |s_i|^2 /(L_p E_p) + \sigma_n^2\right)} \right)$$ when the estimation is based on pilot symbols and when the variance is determined by the module $305_k$.

It has to be noted here that an appropriate normalisation should be made to replace the proportionality by equality.

When the present invention is used in a system in which an Orthogonal Frequency Division Multiplexing technique is used and in which one channel with $L$ paths exists between the transmitter and the receiver, the likelihood of $y_k$ assuming $x_k=s_i$, where $s_i$ is one of the $M=2^m$ modulation symbols, and assuming that the probability density function of the channel estimate is a Gaussian function having a mean $\hat{h}$, is equal to :

$$p\left(y_k \middle| x_k = s_i\right) \propto \exp\left(-\frac{\left|y_k - s_i \sum_{l=0}^{L-1} \Omega_{k,l} \hat{h}_l\right|^2}{2\left(\sigma_h^2 |s_i|^2 + \sigma_n^2\right)}\right)$$ when the estimation is based on pilot symbols and when the variance is provided by the node 330,

$$p\left(y_k \middle| x_k = s_i\right) \propto \exp\left(-\frac{\left|y_k - s_i \sum_{l=0}^{L-1} \Omega_{k,l} \hat{h}_l\right|^2}{2\left(\sigma_n^2 |s_i|^2 / (NsE_p P) + \sigma_n^2\right)}\right)$$ when the estimation is based on pilot symbols and when the variance is determined by the module $305_k$.

$\hat{h}_l$ is the element $l$ of the mean vector $\hat{h}$ of the $L$-dimensional Gaussian function delivered by the downward message. Appropriate normalisation is required to replace the proportionality by equality.

At next step S503, a de-mapping is performed on the soft information on received symbols in order to provide soft information on coded bits belonging to each symbol.

At next step S504, the soft information on coded bits is de-interleaved.

At next step S505, the de-interleaved soft information on coded bits is processed by a decoder as example using a soft-input soft-output decoder like a forward-backward decoder, which output decoded soft information on coded bits.

At next step S506, the decoded soft information on coded bits is interleaved providing upward messages comprising interleaved soft information on coded bits $x_0$ ..., $x_{N-1}$, like extrinsic information.

At step S507, all interleaved soft information on coded bits belonging to the same symbol are multiplied together. This is the mapping step computing the soft information on modulation symbols.

At next step S508, a channel estimation is performed based on data symbols.

The channel $h$ to be estimated is represented by a set of continuous variables.

Instead of quantizing each continuous variable of the set of continuous variables into a set of discrete variables $G_0$, ..., $G_{q-1}$ and then computing the mean and possibly the variance from it, the mean and the variance using observations and soft information on modulation symbols $x_k$ are directly computed. Indeed, the computation of the discrete upward message followed by the computation of the mean of the Gaussian approximation of the single histogram is replaced by a single integral computation.

When Binary Phase Shift Keying modulation is used, single path channel is considered between the transmitter and the receiver and estimation is based on data, the continuous upward message derived from data when the data symbols have energy equal to one is :

$$\exp\left(\frac{s_{k,j_{\max}} y_k}{N}\right).$$

When Quadrature Amplitude Modulation is used, a single path channel is considered between the transmitter and the receiver and the estimation is based on data, the continuous upward message derived from data is:

$$\exp\left(\frac{s_{k,j_{\max}}^* y_k}{NsE_d}\right).$$

When the present invention is used in a system in which an Orthogonal Frequency Division Multiplexing technique is used, one channel with $L$ paths exists between the transmitter and the receiver and the estimation is based on data, the continuous upward message derived from data is :

$$\exp\left(\frac{\Omega_{k,l}{}^{*}\,s_{k,j_{\max}}{}^{*}\,y_k}{NsE_d P}\right).$$

At next step S509, multiplications are performed.

When Binary Phase Shift Keying modulation is used, single path channel is considered between the transmitter and the receiver and estimation is based on data, it is calculated at step S509:

$$\exp(\hat{h}) \approx \prod_{k=0}^{N-1} \exp\left(\frac{s_{k,j_{\max}}\,y_k}{N}\right).$$

When Quadrature Amplitude Modulation is used, a single path channel is considered between the transmitter and the receiver and the estimation is based on data, it is calculated at step S509 :

$$\exp(\hat{h}) \approx \prod_{k=0}^{Ns-1} \exp\left(\frac{s_{k,j_{\max}}{}^{*}\,y_k}{NsE_d}\right).$$

When the present invention is used in a system in which an Orthogonal Frequency Division Multiplexing technique is used, one channel with $L$ paths exists between the transmitter and the receiver and the estimation is based on pilot symbols, it is calculated at step S509:

$$\exp(\hat{h}_l) \approx \prod_{k=0}^{Ns-1} \exp\left(\frac{\Omega_{k,l}{}^{*}\,s_{k,j_{\max}}{}^{*}\,y_k}{NsE_d P}\right)$$

The calculated exponential of mean and possibly the variance is or are fed as a downward message. The algorithm moves then to step S510.

At step S510, the logarithm of the downward message is taken and the likelihood of observation $y_k$ assuming transmission of the modulation symbol $x_k$, i.e., the soft information on the received symbol $x_k$, is computed.

When Binary Phase Shift Keying modulation is used and single path channel is considered between the transmitter and the receiver, the likelihood of $y_k$ assuming $x_k{=}_1$ and assuming that the probability density function of the channel estimate is a Gaussian function having a mean $\hat{h}$, is equal to :

$$p(y_k|x_k=1)=\frac{\beta+(1-\beta)\exp\left(\dfrac{2\,\mathrm{Re}\{y_k\hat{h}^{*}\}}{\sigma_h{}^2+\sigma_n{}^2}\right)}{1+\exp\left(\dfrac{2\,\mathrm{Re}\{y_k\hat{h}^{*}\}}{\sigma_h{}^2+\sigma_n{}^2}\right)}$$ when the estimation is based on data with energy equal to one and when the variance is received from the module 300,

$$p(y_k|x_k=1)=\frac{\beta+(1-\beta)\exp\left(\dfrac{2\,\mathrm{Re}\{y_k\hat{h}^{*}\}}{\sigma_n{}^2/N+\sigma_n{}^2}\right)}{1+\exp\left(\dfrac{2\,\mathrm{Re}\{y_k\hat{h}^{*}\}}{\sigma_n{}^2/N+\sigma_n{}^2}\right)}$$ when the estimation is based on data with energy equal to one and when the variance is determined by the module $305_k$.

When the present invention is used in a system in which a Quadrature Amplitude Modulation is used and in which a single path channel is considered between the transmitter and the receiver, the likelihood of $y_k$ assuming $x_k=s_i$, where $s_i$ is one of the $M=2^m$ modulation symbols, and assuming that the probability density function of the channel estimate is a Gaussian function having a mean $\hat{h}$, is equal to :

$$p(y_k|x_k=s_i) \propto \frac{1}{8\pi\left(\sigma_h^{\;2}|s_i|^2 + \sigma_n^{\;2}\right)} \exp\left(-\frac{\left|y_k - s_i\hat{h}\right|^2}{2\left(\sigma_h^{\;2}|s_i|^2 + \sigma_n^{\;2}\right)}\right)$$ when the estimation is based on data and when the variance is received from the module 300,

$$p(y_k|x_k=s_i) \propto \frac{1}{8\pi\left(\sigma_n^{\;2}|s_i|^2/(NsE_d) + \sigma_n^{\;2}\right)} \exp\left(-\frac{\left|y_k - s_i\hat{h}\right|^2}{2\left(\sigma_n^{\;2}|s_i|^2/(NsE_d) + \sigma_n^{\;2}\right)}\right)$$ when the estimation is based on data and when the variance is determined by the module $305_k$.

It has to be noted here that an appropriate normalisation should be made to replace the proportionality by equality.

When the present invention is used in a system in which an Orthogonal Frequency Division Multiplexing technique is used and in which one channel with $L$ paths exists between the transmitter and the receiver, the likelihood of $y_k$ assuming $x_k=s_i$, where $s_i$ is one of the $M=2^m$ modulation symbols, and assuming that the probability density function of the channel estimate is a Gaussian function having a mean $\hat{h}$, is equal to :

$$p(y_k|x_k=s_i) \propto \exp\left(-\frac{\left|y_k - s_i\sum_{l=0}^{L-1}\Omega_{k,l}\hat{h}_l\right|^2}{2\left(\sigma_h^{\;2}|s_i|^2 + \sigma_n^{\;2}\right)}\right)$$ when the estimation is based on data and when the variance is received from the module 300,

$$p(y_k|x_k=s_i) \propto \exp\left(-\frac{\left|y_k - s_i\sum_{l=0}^{L-1}\Omega_{k,l}\hat{h}_l\right|^2}{2\left(\sigma_n^{\;2}|s_i|^2/(NsE_dP) + \sigma_n^{\;2}\right)}\right)$$ when the estimation is based on data and when the variance is determined by the module $305_k$.

$\hat{h}_l$, is the element $l$ of the mean vector $\hat{h}$ of the L-dimensional Gaussian function delivered by the downward message. Appropriate normalisation is required to replace the proportional by equality.

The loop constituted by the steps S503 to S510 is executed then several times. The number of iterations depends on complexity but also if convergence of the iterative process is quickly reached or not. Several loops are executed on the same received symbols.

## Claims

1. Method for estimating, by a receiver, the likelihood of at least two received symbols assuming symbols transmitted by a transmitter through a channel, the estimation of the likelihood of the received symbols being iterative, wherein the method comprises the steps executed at each iteration of:

    - obtaining (S408) for each of the at least two received symbols, information representative of a channel estimate based on observation on the received symbols, information representative of the channel estimate being an histogram of discrete variables of a quantized estimate of the channel, each discrete variable having a probability determined by determining the likelihood of one received symbol assuming that the channel is the discrete variable, wherein the likelihood is marginalised over all possible values of the corresponding transmitted symbol, the marginalisation being performed by averaging the likelihood over all possible values of the corresponding transmitted symbol taking into account the a priori probability of each value of the corresponding transmitted symbol,
- calculating (S409) a mean from the obtained information,
- estimating (S410) the likelihood of each of the at least two received symbols assuming that the transmitted symbol is a given modulation symbol and assuming that a probability density function of the channel estimate is a Gaussian function having a mean which is equal to the calculated mean.

2. Method according to claim 1, **characterised in that** the method comprises a further step (S409) of multiplying each histogram term by term in order to build a single histogram and **in that** the calculated mean is the mean of the single histogram.

3. Method according to claim 1, **characterised in that** the method comprises further steps of :

- multiplying (S409) each histogram term by term in order to build a single histogram,
- identifying (S409) a Gaussian function which approximates the single histogram,

and **in that** the calculated mean is the mean of the identified Gaussian function.

4. Method according to claim 2 or 3, **characterised in that** the likelihood of one received symbol assuming that the corresponding transmitted symbol is a given modulation symbol is further determined from the variance of the Gaussian function or from the variance of the single histogram and/or from the variance of a complex white Gaussian noise.

5. Method according to any of the claims 1 to 4, **characterised in that** the symbols are modulated by a Binary Phase Shift Keying modulation or by Quadrature Amplitude Modulation or an Orthogonal Frequency Division Multiplexing modulation.

6. Estimator, for use in a receiver (10), for estimating the likelihood of at least two received symbols assuming symbols transmitted by a transmitter through a channel, the estimation of the likelihood of the received symbols being iterative, wherein the estimator comprises means for carrying out the steps, executed at each iteration, of:

- obtaining (S408) for each of the at least two received symbols, information representative of a channel estimate based on observation on the received symbols, information representative of the channel estimate being an histogram of discrete variables of a quantized estimate of the channel, each discrete variable having a probability determined by determining the likelihood of one received symbol assuming that the channel is the discrete variable, wherein the likelihood is marginalised over all possible values of the corresponding transmitted symbol, the marginalisation being performed by averaging the likelihood over all possible values of the corresponding transmitted symbol taking into account the a priori probability of each value of the corresponding transmitted symbol,
- calculating (S409) a mean from the obtained information,
- estimating (S410) the likelihood of each of the at least two received symbols assuming that the transmitted symbol is a given modulation symbol and assuming that a probability density function of the channel estimate is a Gaussian function having a mean which is equal to the calculated mean.

7. Computer program, which can be directly loadable into a programmable device, comprising instructions or portions of code for implementing the steps of the method according to claims 1 to 5, when said computer program is executed on the programmable device.

**Patentansprüche**

1. Verfahren zum Schätzen der Wahrscheinlichkeit von wenigstens zwei empfangenen Symbolen unter Annahme von Symbolen, die durch einen Sender über einen Kanal gesendet sind, durch einen Empfänger, wobei die Schätzung der Wahrscheinlichkeit der empfangenen Symbole iterativ ist, wobei das Verfahren die folgenden bei jeder Iteration ausgeführten Schritte aufweist:

- Erhalten (S408) von Information, die eine Kanalschätzung basierend auf einer Beobachtung an den empfangenen Symbolen darstellt, für jedes der wenigstens zwei empfangenen Symbole, wobei Information, die die Kanalschätzung darstellt, ein Histogramm von diskreten Variablen einer quantisierten Schätzung des Kanals ist, wobei jede diskrete Variable eine Wahrscheinlichkeit hat, die durch Bestimmen der Wahrscheinlichkeit von einem empfangenen Symbol unter Annahme, dass der Kanal die diskrete Variable ist, bestimmt ist, wobei die Wahrscheinlichkeit über alle möglichen Werte der entsprechenden gesendeten Symbole marginalisiert ist, wobei die Marginalisierung durch Bilden eines Durchschnitts der Wahrscheinlichkeit über alle möglichen Werte der entsprechenden gesendeten Symbole unter Berücksichtigung der A-priori-Wahrscheinlichkeit von jedem Wert des entsprechenden gesendeten Symbols durchgeführt wird,

- Berechnen (S409) eines Durchschnitts aus der erhaltenen Information,

- Schätzen (S410) der Wahrscheinlichkeit von jedem der wenigstens zwei empfangenen Symbole unter Annahme, dass das gesendete Symbol ein gegebenes Modulationssymbol ist, und unter Annahme, dass eine Wahrscheinlichkeitsdichtefunktion der Kanalschätzung eine Gauß-Funktion mit einem Durchschnitt ist, der gleich dem berechneten Durchschnitt ist.

2. Verfahren nach Anspruch 1, **dadurch gekennzeichnet, dass** das Verfahren einen weiteren Schritt (S409) zum Multiplizieren jedes Histogramms Ausdruck für Ausdruck aufweist, um ein einziges Histogramm zu bilden, und dass der berechnete Durchschnitt der Durchschnitt des einzigen Histogramms ist.

3. Verfahren nach Anspruch 1, **dadurch gekennzeichnet, dass** das Verfahren folgende weitere Schritte aufweist:

   - Multiplizieren (S409) jedes Histogramms Ausdruck für Ausdruck, um ein einziges Histogramm zu bilden,
   - Identifizieren (S409) einer Gauß-Funktion, die das einzige Histogramm annähert,

   und dass der berechnete Durchschnitt der Durchschnitt der identifizierten Gauß-Funktion ist.

4. Verfahren nach Anspruch 2 oder 3, **dadurch gekennzeichnet**, das die Wahrscheinlichkeit von einem empfangenen Symbol unter Annahme, dass das entsprechende gesendete Symbol ein gegebenes Modulationssymbol ist, weiterhin aus der Varianz der Gauß-Funktion oder aus der Varianz des einzigen Histogramms und/oder aus der Varianz eines komplexen weißen gaußschen Rauschens bestimmt wird.

5. Verfahren nach einem der Ansprüche 1 bis 4, **dadurch gekennzeichnet, dass** die Symbole durch eine binäre Phasenumtastungsmodulation oder durch eine Quadraturamplitudenmodulation oder eine orthogonale Frequenzmultiplexmodulation moduliert werden.

6. Schätzer zur Verwendung in einem Empfänger (10) zum Schätzen der Wahrscheinlichkeit von wenigstens zwei empfangenen Symbolen unter Annahme von Symbolen, die durch einen Sender über einen Kanal gesendet sind, wobei die Schätzung der Wahrscheinlichkeit der empfangenen Symbole iterativ ist, wobei der Schätzer Mittel zum Ausführen der folgenden bei jeder Iteration ausgeführten Schritte aufweist:

   - Erhalten (S408) von Information, die eine Kanalschätzung basierend auf einer Beobachtung an den empfangenen Symbolen darstellt, für jedes der wenigstens zwei empfangenen Symbole, wobei Information, die die Kanalschätzung darstellt, ein Histogramm von diskreten Variablen einer quantisierten Schätzung des Kanals ist, wobei jede diskrete Variable eine Wahrscheinlichkeit hat, die durch Bestimmen der Wahrscheinlichkeit von einem empfangenen Symbol unter Annahme, dass der Kanal die diskrete Variable ist, bestimmt ist, wobei die Wahrscheinlichkeit über alle möglichen Werte der entsprechenden gesendeten Symbole marginalisiert ist, wobei die Marginalisierung durch Bilden eines Durchschnitts der Wahrscheinlichkeit über alle möglichen Werte der entsprechenden gesendeten Symbole unter Berücksichtigung der A-priori-Wahrscheinlichkeit von jedem Wert des entsprechenden gesendeten Symbols durchgeführt wird,

   - Berechnen (S409) eines Durchschnitts aus der erhaltenen Information,

   - Schätzen (S410) der Wahrscheinlichkeit von jedem der wenigstens zwei empfangenen Symbole unter Annahme, dass das gesendete Symbol ein gegebenes Modulationssymbol ist, und unter Annahme, dass eine Wahrscheinlichkeitsdichtefunktion der Kanalschätzung eine Gauß-Funktion mit einem Durchschnitt ist, der gleich dem berechneten Durchschnitt ist.

7. Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 bis 5, wenn das Computerprogramm auf der programmierbaren Vorrichtung ausgeführt wird.

**Revendications**

1. Procédé pour estimer, par un récepteur, la vraisemblance d'au moins deux symboles reçus en supposant que les symboles étant transmis par un émetteur via un canal, l'estimation de la vraisemblance des symboles reçus étant itérative, dans lequel le procédé comporte les étapes exécutées à chaque itération de :

   - obtention (S408) pour chacun des au moins deux symboles reçus, d'informations représentatives d'une estimation de canal basée sur une observation des symboles reçus, les informations représentatives de l'estimation de canal étant un histogramme de variables discrètes d'une estimation quantifiée du canal, chaque variable discrète ayant une probabilité déterminée par la détermination de la vraisemblance d'un symbole reçu en supposant que le canal est la variable discrète dans lequel la vraisemblance est marginalisée sur toutes les valeurs possibles du symbole transmis correspondant, la marginalisation étant effectuée en moyennant la vraisemblance sur toutes les valeurs possibles du symbole transmis correspondant en prenant en compte la probabilité a priori de chaque valeur du symbole transmis correspondant,
   - calcul (S409) d'une moyenne à partir des informations obtenues,
   - estimation (S410) de la vraisemblance de chacun des au moins deux symboles reçus en supposant que le symbole transmis est un symbole de modulation donné et en supposant que la fonction de densité de probabilité de l'estimation de canal est une fonction gaussienne ayant une moyenne qui est égale à la moyenne calculée.

2. Procédé selon la revendication 1, **caractérisé en ce que** le procédé comporte une étape supplémentaire (S409) de multiplication de chaque histogramme terme à terme de manière à construire un seul histogramme et **en ce que** la moyenne calculée est la moyenne du seul histogramme.

3. Procédé selon la revendication 1, **caractérisé en ce que** le procédé comporte en outre les étapes de :

   - multiplication (S409) de chaque histogramme terme à terme de manière à construire un seul histogramme,
   - identification (S409) d'une fonction gaussienne qui approxime le seul histogramme,

   et **en ce que** la moyenne calculée est la moyenne de la fonction Gaussienne identifiée.

4. Procédé selon la revendication 2 ou 3, **caractérisé en ce que** la vraisemblance d'un symbole reçu, en supposant que le symbole transmis correspondant est un symbole de modulation de données, est en outre déterminée à partir de la variance de la fonction gaussienne ou à partir de la variance du seul histogramme et/ou à partir de la variance d'un bruit blanc gaussien complexe.

5. Procédé selon l'une quelconque des revendications 1 à 4, **caractérisé en ce que** les symboles sont modulés par une modulation binaire par changement de phase ou par une modulation d'amplitude en quadrature ou une modulation par multiplexage orthogonal par répartition en fréquence.

6. Estimateur utilisé dans un récepteur (10) pour estimer la vraisemblance d'au moins deux symboles reçus en supposant que les symboles étant transmis par un émetteur via un canal, l'estimation de la vraisemblance des symboles reçus étant itérative, dans lequel l'estimateur comporte des moyens pour mettre en oeuvre les étapes, exécutées à chaque itération, de :

   - obtention (S408) pour chacun des au moins deux symboles reçus, d'informations représentatives d'une estimation de canal basée sur une observation des symboles reçus, les informations représentatives de l'estimation de canal étant un histogramme de variables discrètes d'une estimation quantifiée du canal, chaque variable discrète ayant une probabilité déterminée par la détermination de la vraisemblance d'un symbole reçu en supposant que le canal est la variable discrète dans lequel la vraisemblance est marginalisée sur toutes les valeurs possibles du symbole transmis correspondant, la marginalisation étant effectuée en moyennant la vraisemblance sur toutes les valeurs possibles du symbole transmis correspondant en prenant en compte la probabilité a priori de chaque valeur du symbole transmis correspondant,
   - calcul (S409) d'une moyenne à partir des informations obtenues,
   - estimation (S410) de la vraisemblance de chacun des au moins deux symboles reçus en supposant que le symbole transmis est un symbole de modulation donné et en supposant que la fonction de densité de probabilité de l'estimation de canal est une fonction gaussienne ayant une moyenne qui est égale à la moyenne calculée.

7. Programme d'ordinateur qui peut être directement chargeable dans un dispositif programmable, comportant des instructions ou portions de code pour mettre en oeuvre les étapes du procédé selon les revendications 1 à 5, lorsque ledit programme informatique est exécuté sur un dispositif programmable.

Fig. 1

$230$

$220_0$

$220_{N-1}$

$220_k$

$205_0$     $205_k$     $205_{N-1}$

$y_0$    Estimation on observation $y_0$     $y_k$    Estimation on observation $y_k$     $y_{N-1}$    Estimation on observation $y_{N-1}$

$x_0$     — — —     $x_k$     — — —     $x_{N-1}$

$210_k$

$210_0$     $210_{N-1}$

$200$

## Fig. 2

$330$

$320_0$     $320_{N-1}$

$320_k$

$305_0$     $305_k$     $305_{N-1}$

$y_0$    Detection on observation $y_0$     $y_k$    Detection on observation $y_k$     $y_{N-1}$    Detection on observation $y_{N-1}$

$x_0$     — — —     $x_k$     — — —     $x_{N-1}$

$310_k$

$310_1$     $310_{N-1}$

$300$

## Fig. 3

S400 — Estimation on pilot symbols

S401 — Multiplication of discrete pdf term by term and mean/ variance calculation

S402 — Detection based on mean/variance for pilots

S403 — Demapping

S404 — Deinterleaving

S405 — Decoding

S406 — Interleaving

S407 — Multiplying soft information of bits belonging to same symbol

S410 — Detection based on mean/variance for data

S408 — Estimation on data symbols

S409 — Multiplication of discrete pdf term by term and mean/ variance calculation

# Fig. 4

S500 Estimation on pilot symbols

S501 Multiplications

S502 Detection based on mean/variance for pilots

S503 Demapping

S504 Deinterleaving

S505 Decoding

S506 Interleaving

S507 Multiplying soft information of bits belonging to same symbol

S510 Detection based on mean/variance for data

S508 Estimation on data symbols

S509 Multiplications

## Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHING -SHYANG et al.** *Blind joint channel estimation and signal decoding for systems with time-varying Rayleigh-fading channels*
- *57th VTC conference,* 22 April 2003
- **A. P. DEMPSTER ; N. M. LAIRD ; D. B. RUBIN.** Maximum likelihood from incomplete data via the EM algorithm. *Journal of the Royal Statistical Society (B),* 1977, vol. 13 (6), 1-38

- **H-A LOELIGER.** An Introduction to Factor Graphs. *IEEE Mag. on Signal Processing,* January 2004, vol. 21, 28-41
- **A.P. WORTHEN ; W. E. STARK.** Unified Design of Iterative Receivers Using Factor Graphs. *IEEE Trans. on Information Theory,* February 2001, vol. 47 (2), 843-849